# EUROPEAN PATENT APPLICATION

(11) **EP 2 098 796 A1**
(43) Date of publication of application: **09.09.2009**
(21) Application number: 08102252.7
(22) Date of filing: 04.03.2008
(51) Int. Cl.: F24F 12/00, F24F 7/007, F24F 1/02, F24F 13/20

(54) **Compact device for air change with heat recovery**

(71) Applicant: New Evelino Srl, 35131 Padova (IT)
(72) Inventor: Tognazzo, Evelino, 35131 Padova (IT)
(74) Representative: Vinci, Marcello

(57) **Abstract**

The invention is a new air change device for use in enclosed places (L), comprising a frame (T) containing one air exhaust fan (U) suited to draw air from the inside of the room (L) and discharge it outside (R), one air inlet fan (E) suited to draw air from the outside (R) and deliver it into the room (L), one cross flow heat exchanger, one air inlet opening (MA) positioned in the lower part of said frame (T) and directed downwards, one air exhaust opening (RA) positioned frontally on said frame (T) and directed parallel to the floor.

## Description

The present invention concerns systems for air change in enclosed places and in particular it concerns a new compact device for air change with heat recovery.

Air exchange systems are known that are commonly installed in enclosed places, in particular in public places, in order to guarantee a constant air change and recirculation.

The known air exchange systems are equipped with one or more fans that suck in the stale air, filled with smoke particles, dust, etc, from the inside of the room and discharge it in the external environment. A similar fan sucks in clean air from the outside and introduces it into the room after it has passed through suitable filters.

Said known air exchange systems, furthermore, are often equipped also with at least one heat recovery device, generally a cross flow heat exchanger, which makes it possible to recover even more than 50% of the thermal energy of the air extracted from the room.

In particular, the stale air extracted from the room, hot in winter and cool in summer, is introduced into said heat exchanger where, once in contact with the exchanger plates, transfers or absorbs heat from the air sucked in from the outside that flows countercurrent inside said exchanger. In this way, the air coming from the outside, cold in winter and hot in summer, passes through said exchanger and is thus heated or cooled and introduced in the room at a temperature that is almost equal to the temperature in the room, which therefore remains almost unchanged and constant, notwithstanding the continuous air exchange between the inside and the outside.

The flows of internal and external air are always kept separate, so that only the heat is transferred from one to the other, and not the polluting particles contained in the stale air present inside the room.

Usually, the air exhaust and inlet unit located inside the room is installed on the ceiling or on a wall, while sometimes it is integrated in the wall or partially concealed by a false ceiling, so that only the air exhaust and inlet grilles are visible.

Said grilles are usually positioned parallel to the walls and therefore the air flow delivered into the room is orthogonal to the walls, that is, parallel to the ceiling.

The known systems comprise a plurality of grilles for air exhaust from the inside of the room, through which the air is channelled in suitable ducts and then discharged outside the room.

Said channelling ducts have a negative effect on the appearance of the room and in any case require long and complex installation procedures and sometimes need to be covered by walls and false ceilings.

Air recirculation devices are also known that have no external air intake, that is, devices that extract the stale air from the inside of the room, purify it eliminating impurities like smoke particles, pollen, dust ect and deodorize it with suitable filters, then they cool/heat the air via coils/resistances and reintroduce it in the room.

In this case, the efficiency of said devices is strictly related to the degree of wear of the filters, which must be replaced very often in order to be able to guarantee good air quality inside the room.

Furthermore, said recirculation devices without external air intake are not sufficient for adequate air recirculation, in particular in smoking rooms, where, according to the smoke-free regulations regarding the prohibition to smoke in public places, it is necessary to achieve a certain air exchange rate, which said devices cannot guarantee. Furthermore, always in accordance with the above mentioned smoke-free regulations, inside smoking rooms it is necessary to ensure a slight decrease in pressure with respect to the adjacent communicating rooms, in order to prevent the stale air from flowing towards the adjacent non-smoking rooms. To overcome all the drawbacks described above, a new type of compact device for air change, with heat recovery via finned batteries with coils containing glycol fluids has been designed and constructed.

The main object of the present invention is to ensure sufficient air exchange in enclosed places, reintroducing in the environment clean air coming from the outside, with no need to use air channelling systems, but exploiting the natural convective movements of stale air.

Another object of the present invention is to obtain an effective heat recovery from the extracted air, thanks to the use of finned batteries with coils containing glycol fluid.

Another object of the present invention is to reduce the noise compared to other systems that use different heat recovery devices.

A further object of the present invention is to prevent the outflow of stale air from the room where the device is installed into the communicating rooms, by maintaining a given, lower pressure in the room itself.

Another advantage offered by the present invention lies in that if necessary it can also cool/heat the air delivered into the room, thanks to the installation of a cooling/heating circuit operating as a heat pump.

One of the advantages offered by the present invention lies in that it signals that the device is on and therefore smoking is allowed or, alternatively, that the device is off and smoking is not allowed.

These and other direct and complementary objects are achieved by the new compact device for air change, with heat recovery via finned batteries with coils containing glycol fluids.

The present invention comprises, in its main parts, a frame containing at least one air inlet fan, suited to suck in air from the outside and deliver it into the room, at least one air exhaust fan, suited to extract air from the inside of the room and discharge it outside, and at least one heat recovery device for transferring thermal energy between the air flows that are delivered into and extracted from the room, comprising finned batteries with coils containing glycol fluid.

Furthermore, the new device preferably comprises at least one cooling and heating circuit operating as a heat pump for the air flow delivered into the room, said circuit comprising at least one compressor, at least one evaporator and at least one condenser integrated into the device itself, in addition to all the accessories necessary for the operation of the circuit. Since the device is compact and the circuit operating as a heat pump is integrated in the device itself, the installation of the new device is simple and it does not require the preparation of the room with costly and unsightly air channelling systems, both in sight and recessed.

Furthermore, the present invention preferably comprises at least one control board through which it is possible to check the operating parameters, equipped with the required regulators, warning lights, displays and so on, and if necessary with one or more luminous panels indicating whether smoking is allowed or not, depending on the operating status of the device.

Said control board can be integrated in the device or installed remotely.

In the preferred embodiment of the invention the new device is compact, which means that it consists of a single unit, preferably installed on a wall, communicating with the outside in a preferably direct manner, in order to suck in the external air to be introduced in the room and to discharge the stale air extracted from the room.

The new compact device thus produces at least two air flows, at least one of which originating from the inside and discharged outside, and at least one heat recovery device, preferably comprising one or more finned batteries provided with one or more coils containing glycol fluid suited to ensure the highly efficient transfer of heat between the flows, while preventing the exchange of polluting particles.

The air flow taken in from the outside is then introduced in the room through at least one opening, equipped with the corresponding grille and filters, preferably located in the lower part of the device, so that the direction of said flow of clean air is substantially orthogonal to the floor. Vice versa, the new device draws the air from the room through at least one opening, equipped with the corresponding grille and filters, preferably located frontally on the new device, in such a way as to extract the air from the upper area of the room, near the ceiling.

It is known that the air filled with smoke particles tends to remain stationary in the upper area of the room, at approximately three quarters of its height. The position of the air exhaust opening, therefore, makes it possible to extract the air directly from the area with the highest concentration of polluting particles.

According to a further possible embodiment of the invention, it is possible to set up the system so that the air inlet and exhaust flows can be channelled via suitable ducts connected to said openings. This solution should be preferred when the device is applied, for example, above a false ceiling, so that it is possible to draw or introduce air from/into one or more adjacent rooms through said channelling ducts. According to the invention, it is also possible to use one or more batteries for post-heating the air flow that enters the room, powered, for example, by electricity or water.

According to the invention, furthermore, said inlet and exhaust fans can be provided with motors having different powers, and in particular the motor of said air inlet fan has a power that is preferably equal to 2/3 of the power of the exhaust fan motor.

In this way a volume difference between the air delivered into the room and the air extracted from the room is guaranteed, in order to ensure an adequate pressure decrease inside the room itself and thus prevent the stale air present inside the room from flowing into the adjacent communicating rooms. According to the invention, said motors may also have mutually adjustable power, so that it is possible to obtain different pressures in the rooms where the device is installed and in the adjacent rooms.

It is also possible to use adjustable vents for connecting the room where the device is installed and the surrounding rooms, wherein said adjustable vents have the function to balance and bypass the difference between the air volumes extracted from the room and the air volumes introduced into the room itself.

The air volumes to be treated preferably range between 300 and 5000 m³/h, and therefore the invention can be successfully installed in public places, both in smoking and non-smoking rooms.

The characteristics of the present invention will be highlighted in greater detail in the following description, with reference to the enclosed drawings, attached as examples without limitation.
Figures 1a, 1b, 1c and 1d show the four orthogonal projections, right, front, left and top, of the invention.
Figures 2a, 2b and 2c show three sections of the new device carried out according to a possible alternative embodiment of the invention, with the condenser (A) and the evaporator (B) of the cooling/heating circuit operating as a heat pump.
Figure 3 is a schematic view of the new device, where the air flows delivered into (Wi) and extracted from (Wo) the room are channelled via channelling ducts (P1, P2).

The new air change device comprises at least one frame (T) containing at least one air inlet fan (E), suited to suck in air from the outside (R) and deliver it into the room (L), at least one air exhaust fan (U), suited to extract air from the inside of the room (L) and discharge it outside (R), and at least one heat recovery device (C) for transferring thermal energy between the air flows that are delivered into (Wi) and extracted from (Wo) the room (L), and one or more filters.

Furthermore, the present invention preferably comprises at least one control board (Q) through which it is possible to check the operating parameters of the device, said board being equipped with the required regulators, warning lights, displays and so on, and with one or more luminous panels (P, D) indicating, for example, that smoking in the room (L) is allowed when said device is on, or that smoking is not allowed when said device is off.

Said control board (Q) is integrated in the device, as shown in the figures, or installed remotely.

The new device is compact, which means that it consists of a single unit, preferably installed on a wall, directly communicating with the outside (R) in order to draw the external air to be introduced into the room (L) and to discharge the stale air extracted from the room (L).

The new compact device thus generates at least two air flows (Wi, Wo), at least one of which (Wo) comes from the inside of the room (L) and is discharge outside (R), while at least one further air flow (Wi) comes from the outside (R) and is introduced into the room (L).

The air flow (Wi) is drawn from the outside (R) through at least one external air intake (PEA) and is then introduced into the room (L) through at least one air inlet opening (MA), equipped with the corresponding grille and filters, preferably located in the lower part of the device, so that the direction of said flow of clean air (Wi) delivered into the room (L) is substantially orthogonal to the floor and tangential to the wall on which the device has been installed.

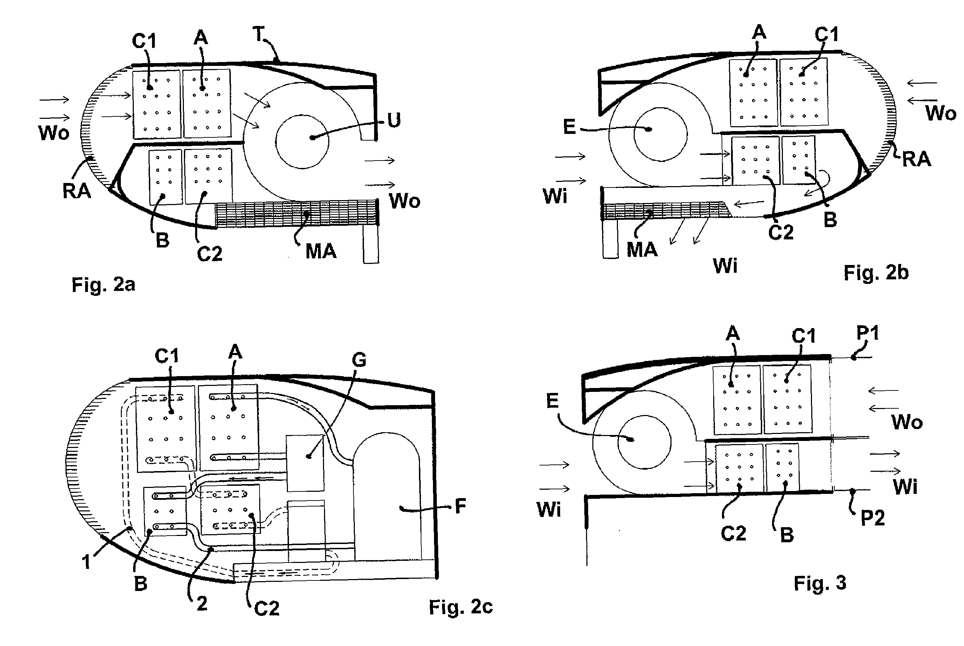

According to the invention, said flow of clean air (Wi) can also be introduced into the room (L) through the front of the device, that is, in a direction substantially parallel to the ground or slightly inclined downwards. Vice versa, the new device draws the air from the room through at least one air exhaust opening (RA), equipped with the corresponding grille and filters, preferably located frontally on the new device, in such a way as to extract the air at a height corresponding to approximately three fourths of the room's height, that is, where there is the highest concentration of polluting particles. The stale air is then discharged outside (R) via at least one air discharge opening (EA). As shown in Figure 3, said incoming air flow (Wi) and said outgoing air flow (Wo) can be channelled in separate channelling ducts (P1, P2) for extracting/delivering air from/into one or more adjacent rooms. This solution is particularly effective when said device is applied, for example, above a false ceiling.

Said flows (Wi, Wo) are conveyed countercurrent into at least one heat recovery device (C) while remaining separate, in such a way as to guarantee heat transfer but at the same time preventing any exchange of polluting particles.

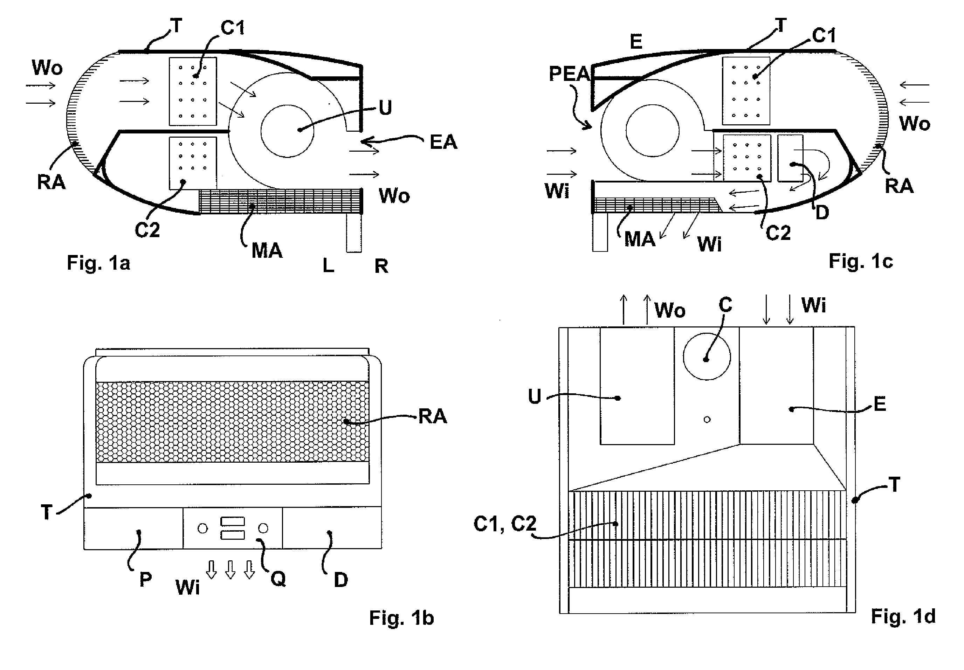

Said heat recovery device (C) comprises, in the preferred embodiment of the invention shown in Figures 1a, 1c and 1d, two finned batteries (C1, C2) with coils containing glycol fluid, suited for example to recover heat from the outgoing air flow (Wo) to pre-heat the air flow (Wi) that is being delivered into the room (L), according to the circuit (1) shown in Figure 2b. As shown in Figure 1c, the new device may also comprise one or more batteries for the post-heating (D) of the air flow (Wi) that is delivered into the room (L), powered, for example, by electricity or water.

In the possible alternative embodiment illustrated in Figures 2a, 2b and 2c, the new device also comprises at least one cooling/heating circuit operating as a heat pump (2), integrated in the device itself, comprising at least one compressor (F), at least one condenser (A), at least one evaporator (B) and one or more compensation tanks (G).

Said cooling/heating circuit operating as a heat pump (2) can be used to cool the air flow (Wi) delivered into the room (L), or it can be inverted in order to heat the air flow (Wi) delivered into the room (L).

Therefore, with reference to the above description and the attached drawings, the following claims are expressed.

## Claims

1. New air change device for use in enclosed places (L), comprising at least one frame (T) containing at least one air exhaust fan (U), suited to draw air from the inside of the room (L) and discharge it outside (R), at least one air inlet fan (E), suited to draw air from the outside (R) and deliver it into the room (L), at least one heat recovery device (C) for transferring thermal energy between the air flows that are delivered into (Wi) and extracted from (Wo) said room (L), **characterized in that** it comprises:
■ at least one air inlet opening (MA) suited to deliver said incoming air flow (Wi) into said room (L), positioned in the lower part of said frame (T) and directed downwards,
■ at least one air exhaust opening (RA) suited to extract the stale air from the inside of said room (L), positioned frontally on said frame (T) and directed parallel to the floor,
and wherein said heat recovery device (C) comprises at least one finned battery (C1, C2) with coils containing glycol fluid for transferring heat between said outgoing air flow (Wo) and said incoming air flow (Wi).

2. New air change device according to claim 1, **characterized in that** it comprises at least one battery (D) for the post-heating of the air flow (Wi) that enters the room (L).

3. New air change device according to claims 1, 2, **characterized in that** it comprises at least one cooling/heating circuit operating as a heat pump (2), integrated in the device itself, for cooling/heating the air flow (Wi) that enters the room (L).

4. New air change device according to claims 1, 2, 3, **characterized in that** the motor of said air inlet fan (E) and the motor of said air exhaust fan (U) have adjustable powers, said motors being dependent or independent of each other.

5. New air change device according to claims 1, 2, 3, 4, **characterized in that** the motor of said air inlet fan (E) is less powerful than the motor of said air extraction fan (U).

6. New air change device according to claims 1, 2, 3, 4, 5, **characterized in that** the power of the motor of said air inlet fan (E) is equal to 2/3 of the power of the motor of said air exhaust fan (U).

7. New air change device according to the preceding claims, **characterized in that** it is installed on a wall, in a position near the ceiling.

8. New air change device according to the preceding claims, **characterized in that** it comprises at least one channelling duct (P1) for said outgoing air flow (Wo) and at least one separate channelling duct (P2) for said incoming air flow (Wi).

9. New air change device according to the preceding claims, **characterized in that** it comprises one or more luminous panels and/or displays that signal whether smoking in said room (L) is allowed or not when said device is on/off, said panels and/or displays being integrated in the device itself or directly/indirectly connected to it from a remote position.
